Europäisches Patentamt

European Patent Office

Office européen des brevets

(19)

(11) Veröffentlichungsnummer : **0 195 265**
**B1**

(12) EUROPÄISCHE PATENTSCHRIFT

(45) Veröffentlichungstag der Patentschrift :
21.12.88

(21) Anmeldenummer : 86102173.1

(22) Anmeldetag : 19.02.86

(51) Int. Cl.⁴ : **B 28 D** 1/14, B 23 B 29/034

(54) Werkzeug zur Herstellung hinterschnittener Bohrlöcher.

(30) Priorität : 22.03.85 DE 3510375

(43) Veröffentlichungstag der Anmeldung :
24.09.86 Patentblatt 86/39

(45) Bekanntmachung des Hinweises auf die Patenterteilung : 21.12.88 Patentblatt 88/51

(84) Benannte Vertragsstaaten :
AT CH DE FR GB IT LI NL SE

(56) Entgegenhaltungen :
EP-A- 0 019 018
DE-A- 2 928 555
FR-A- 759 981
US-A- 3 256 755

(73) Patentinhaber : ROBERT BOSCH GMBH
Postfach 50
D-7000 Stuttgart 1 (DE)

(72) Erfinder : Hecker, Roland, Dr.Ing.
Manosquerstrasse 96
D-7022 Leinfelden (DE)
Erfinder : Kapfer, Helmut
Germanenstrasse 6
D-7022 Leinfelden (DE)

## Beschreibung

### Stand der Technik

Die Erfindung geht aus von einem Werkzeug zur Herstellung hinterschnittener Bohrlöcher, der im Oberbegriff des Anspruchs 1 angegebenen Gattung.

Solche hinterschnittenen Bohrungen, d. h. entlang eines Abschnittes in Bohrrichtung sich erweiternden Bohrlöcher, in Wänden, Mauerwerken od. dgl. werden in der Befestigungstechnik zur Aufnahme von sog. Formschluß- oder Hinterschnittdübeln oder zur Aufnahme von einbetonierten Befestigungsankern benötigt. Formschluß- oder Hinterschnittdübel sind Dübel, die nach Einführen in das Bohrloch, z. B. durch Anziehen einer Schraube, einen Keil spreizen, der sich auf der hinterschnittenen Kante des Bohrlochs abstützt. Bei Befestigungsankern entsteht durch das Hinterschnittloch ein Formschluß zwischen Mauerwerk und Mörtelmasse, da auch letztere hinter die Hinterschnittschulter gelangt, wodurch ein Herausreißen der Mörtelmasse aus dem Bohrloch verhindert wird.

Bei einem bekannten Bohrwerkzeug der eingangs genannten Art zur Herstellung von Hinterschnittlöchern (DE-PS 23 54 229) besteht der Ausrückmechanismus zum seitlichen Ausschieben der den Hinterschnitt erzeugenden Nebenschneide in der Schwenkbeweglichkeit der Nebenschneide und in einer Kulissenverbindung zwischen der Nebenschneide und einer auf dem Antriebsschaft der Hauptschneide sitzenden Vorschubhülse. Nach Bohren eines zunächst zylindrischen Eingangs- oder Grundloches mittels der Hauptschneide setzt sich die Vorschubhülse auf das Mauerwerk auf und verschiebt sich bei weiterem Vorschub der Hauptschneide auf dem Schaft, wobei über die Kulissenverbindung die Nebenschneide mehr und mehr nach außen geschwenkt wird und ein im Durchmesser vergrößertes Hinterschnittloch durch drehende Bewegung ausbohrt.

Dieses Bohrwerkzeug hat den Nachteil, daß selbst bei Verwendung einer drehschlagenden Antriebsmaschine, z. B. eines Bohrhammers, die Nebenschneide — im Gegensatz zur Hauptschneide — das Bohrgestein nur drehend bearbeitet, und zwar durch die auf die Hauptschneide von der Antriebsmaschine her übertragene Drehbewegung. Dadurch gehen für die Nebenschneide die Vorteile der drehschlagenden Gesteinsbearbeitung verloren. Das bedeutet, daß das Bohrwerkzeug nur für weniger hartes Gestein einsetzbar ist, nur geringe Hinterschnittiefen und zudem die Hinterschnittbohrungen nur mit geringer Bohrgeschwindigkeit erstellt werden können.

### Vorteile der Erfindung

Das erfindungsgemäße Werkzeug mit den kennzeichnenden Merkmalen des Anspruchs 1 hat demgegenüber den Vorteil, daß nicht nur die Hauptschneide sondern auch die Seiten- oder Nebenschneide eine kombinierte, von der Antriebsmaschine abgeleitete Dreh- und Schlagbewegung ausführt, so daß das Bohrloch sowohl in axialer als auch in radialer Richtung drehschlagend bearbeitet wird. Damit kann die Dreh- und Schlagbewegung der Antriebsmaschine auch für den Hinterschnitt vollständig ausgenutzt werden, so daß das Erstellen von Bohrlöchern mit relativ breitem Hinterschnitt auch in relativ hartem Gestein möglich ist.

Bei dem erfindungsgemäßen Werkzeug wird die Stoßenergie der Antriebsmaschine über den Schlagstößel auf die mit der Hauptschneide rotierende Nebenschneide übertragen, wodurch einerseits der Bohrschlagbolzen ausgerückt wird und andererseits der Bohrschlagbolzen eine schlagende Bearbeitung des Bohrlochs durchführt. Dies erfolgt solange, als die stirnseitige Schlagfläche des Schlagstößels über die stirnseitige Schlagfläche des Schaftes des Werkzeugs vorsteht. Danach wird wieder die Hauptschneide schlagend angetrieben und so fort, wobei die Haupt- und Nebenschneide fortlaufend rotieren. Die Energie des Schlagkolbens der Antriebsmaschine wird damit in schneller Folge auf Haupt- und Nebenschneide aufgeteilt.

Mit dem erfindungsgemäßen Werkzeug wird damit selbst im harten Bohrgestein eine hohe Bohrgeschwindigkeit erzielt. Außerdem ermöglicht die Ausbildung der Nebenschneide, einen relativ breiten Hinterschnitt herzustellen.

Das zylindrische Bohrloch ohne Hinterschnitt als sog. Eingangs- oder Grundloch wird mit der Hauptschneide nach Entfernen des Schlagstößels aus der Zentralbohrung des Schaftes gebohrt. Ist die Tiefe des Hinterschnittabsatzes im Grundloch erreicht, so wird der Schlagstößel wieder in die Zentralbohrung eingesetzt. Haupt- und Nebenschneide arbeiten wieder in der beschriebenen Weise. Die axiale Tiefe des Hinterschnitts kann so beliebig gebohrt werden. Die Breite des Hinterschnitts ist von der Ausschublänge des Bohrschlagbolzens bestimmt.

Durch die in den weiteren Ansprüchen aufgeführten Maßnahmen sind vorteilhafte Weiterbildungen und Verbesserungen des im Anspruch 1 angegebenen Werkzeugs möglich.

### Zeichnung

Die Erfindung ist anhand eines in der Zeichnung dargestellten Ausführungsbeispiels in der nachfolgenden Beschreibung näher erläutert. Es zeigen jeweils im Längsschnitt und etwas schematisiert:

Fig. 1 ein zur Verwendung in einem Bohrhammer bestimmtes Werkzeug zum Herstellen von hinterschnittenen Bohrlöchern,

Fig. 2 das Werkzeug in Fig. 1 bei entferntem Schlagstößel zum Schlagbohren eines zylindrischen Grund- oder Eingangsloches,

Fig. 3 das Werkzeug in Fig. 1 bei wieder eingesetztem Schlagstößel und ausgerückter Nebenschneide zur Herstellung eines Hinterschnitts,

Fig. 4 das Werkzeug in Fig. 1 in drei verschiedenen Momentanzuständen bei der Herstellung des Hinterschnitts.

Beschreibung des Ausführungsbeispiels

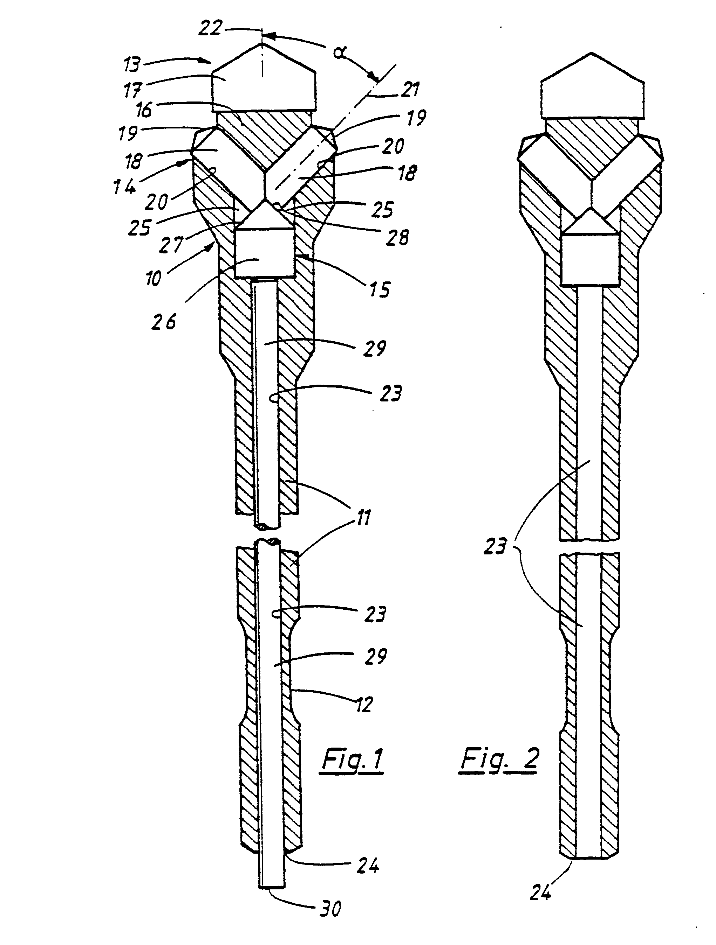

Das in Fig. 1 im Längsschnitt zu sehende Werkzeug zur Herstellung hinterschnittener Bohrlöcher ist für den Einsatz in einer drehenden und schlagenden Antriebsmaschine, z. B. in einem Bohrhammer oder in einer Schlagbohrmaschine, bestimmt. Das zylindrisch mit abgestuftem Durchmesser ausgebildete einstückige Werkzeug läßt sich in einen Schneidenkopf 10 und in einen den Schneidenkopf 10 tragenden Schaft 11 unterteilen, dessen vom Schneidenkopf 10 abgekehrter Endabschnitt 12 zum Einstecken in die Werkzeugaufnahme der hier nicht dargestellten drehschlagenden Antriebsmaschine ausgebildet ist. Am Schneidenkopf 10 steht eine Hauptschneide 13 axial vor, während eine Seiten- oder Nebenschneide 14 hinter der Hauptschneide aus dem Schneidenkopf 10 mittels eines Ausrückmechanismus 15 ausschiebbar ist. Die Hauptschneide 13 besteht aus einem an der Stirnseite des Schneidenkopfes 10 axial vorstehenden Hauptschneidenkörper 16 mit gegenüber dem Schneidenkopf 10 reduziertem Durchmesser und einer auf dem Hauptschneidenkörper 16 gehaltenen Hauptschneidekrone 17.

Die Nebenschneide 14 weist einen oder mehrere Bohrschlagbolzen 18 auf, von welchen in Fig. 1 zwei dargestellt sind. Jeder Bohrschlagbolzen 18 trägt eine kegelförmige Schneidspitze 19 und ist in einer Führungsbohrung 20 im Schneidenkopf 10 axial verschieblich gehalten. Die Längsachse 21 jeder Führungsbohrung, und damit die Längsachse jedes Bohrschlagbolzens 18, schließt mit der Längsachse 22 der Hauptschneide 13 einen spitzen Winkel α ein, so daß die Längsachsen 21 aller Führungsbohrungen 20 einen Kegelmantel mit einem Öffnungswinkel 2α aufspannen.

Im Schaft 11 ist eine axial verlaufende Zentralbohrung 23 vorgesehen, die einerseits im Endabschnitt 12 an der Stirnseite 24 des Schaftes 11 mündet und andererseits bis in den Schneidenkopf 10 hineinragt und dort in einen Bohrungsabschnitt 25 mit größerem Durchmesser übergeht. In diesen Bohrungsabschnitt 25 ragen die Bohrschlagbolzen 18 mit ihrem von den Schneidspitzen 19 abgekehrten Enden hinein und stehen dort mit einem in dem Bohrungsabschnitt 25 axial geführten zylindrischen Ausrückelement 26 mit Kegelspitze 27 in Wirkverbindung. Dabei liegen die Bohrschlagbolzen 18 mit entsprechend ausgebildeten Anlageflächen 28 an dem Kegelmantel der Kegelspitze 27 an.

Das Ausrückelement 26 bildet einen Teil des Ausrückmechanismus 15, zu dem noch ein in die Zentralbohrung 23 einschiebbarer Schlagstößel 29 hinzukommt. Dieser Schlagstößel 29 liegt mit seiner einen Stirnseite an der ebenen Stirnseite des Ausrückelements 26 an und steht bei vollständig in den Schneidenkopf 10 eingezogenen Bohrschlagbolzen 18 über die Stirnseite 24 des Schaftes 11 vor. Die hier befindliche Stirnseite 30 des Schlagstößels 29 bildet ebenso wie die Stirnseite 24 des Schaftes 11 eine Schlagfläche für den Schlagbolzen des Bohrhammers.

Die Wirkungsweise des beschriebenen Werkzeugs ist wie folgt:

Bei aus der Zentralbohrung 23 entferntem Schlagstößel 29 beaufschlagt der Schlagkolben des Bohrhammers die Stirnseite 24 des Schaftes 11, so daß bei drehendem Werkzeug die Schläge des Bohrhammers über den Schaft 11 auf die Hauptschneide 13 übertragen werden. Das Bohrloch wird in Axialrichtung drehschlagend bearbeitet, und es entsteht ein zylindrisches Bohrloch dessen Durchmesser vom Durchmesser der Hauptschneide 13 bestimmt ist (Fig. 2).

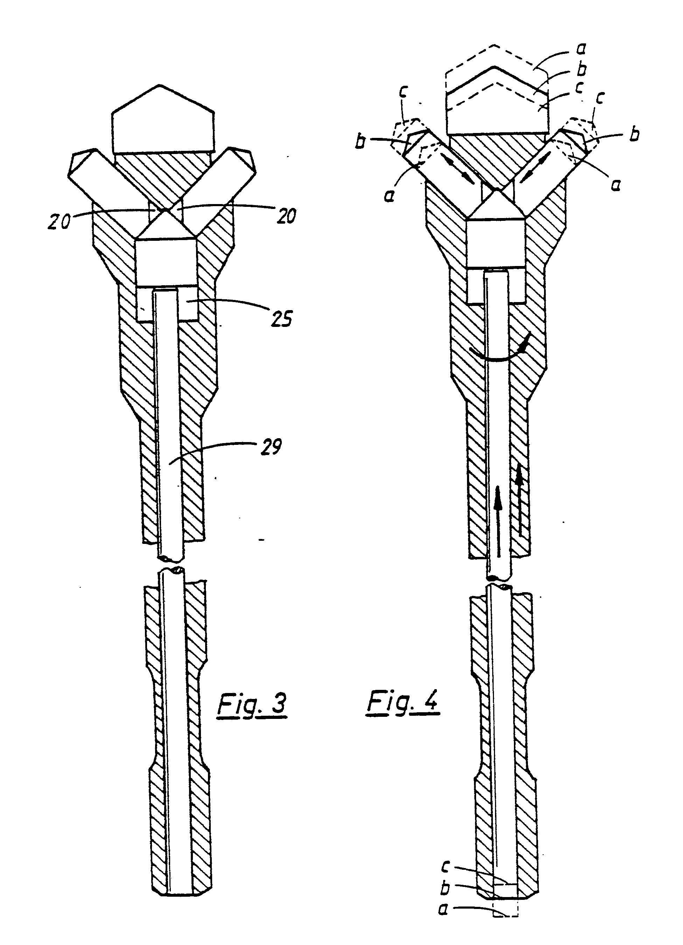

Soll nunmehr das zylindrische Bohrloch von einer bestimmten Bohrtiefe an hinterschnitten werden, also der Durchmesser der Bohrung vergrößert werden, so ist der Schlagstößel 29 wieder in die Zentralbohrung 23 einzuschieben (Fig. 1). Der Schlagkolben des Schlaghammers beaufschlagt nunmehr die über die Stirnseite 24 des Schaftes 11 vorstehende Stirnseite 30 des Schlagstößels 29 und schiebt diesen bei jedem Schlag einwärts. Der Schlag des Bohrhammers wird über den Schlagstößel 29 auf das Ausrückelement 26 übertragen. Dieses drückt die Bohrschlagbolzen 18 in ihren Führungsbohrungen 20 vollständig hinaus (Fig. 3). Außerdem wird noch Stoßenergie über die Bohrschlagbolzen 18 auf das Bohrgestein übertragen. Dieses wird bei nach wie vor rotierendem Schneidenkopf 10 drehschlagend bearbeitet.

Die verschiedenen Positionen von Hauptschneide 13 und Nebenschneide 14 während der Herstellung des Hinterschnitts im Bohrloch sind in Fig. 4 in drei Positionen festgehalten, wobei die Positionen a und c Endpositionen und die Position b eine Mittelposition darstellt. In der Position a sind die Bohrschlagbolzen 18 eingerückt. Bei rotierendem Schneidenkopf 10 wird der Schlagstößel 29 vom Schlagkolben des Bohrhammers geschlagen. Der Schlagstößel 29 bewegt sich in den Schaft 11 hinein, wodurch die Bohrschlagbolzen 18 geschlagen und ausgerückt werden. Befinden sich die Stirnseiten 24 und 30 von Schaft 11 und Schlagstößel 29 auf gleicher Höhe (Position b) wird zusätzlich auf die Hauptschneide 13 ein Schlag eingeleitet. Die Stoßenergie im Schlagstößel 29 drückt die Bohrschlagbolzen 18 vollständig hinaus und überträgt dabei noch Stoßenergie über die Schneidspitzen 19 an das Bohrgestein. Die Stirnseite 30 des Schlagstößels 29 befindet sich nun weiter vorn als die Stirnseite 24 des Schaftes 11 (Position c), wodurch nunmehr nur die Hauptschneide 13 vom Bohrhammer geschlagen wird. Diese Schlagpositionen lösen sich sehr schnell im Rhythmus der Kolbenfrequenz des Schlagkolbens des Bohrhammers wechselseitig ab, wobei noch viele Zwischenstellungen auftreten. Diesem Schlagvorgang ist noch die kontinuierliche Drehbewegung des Werkzeugs überlagert.

## Patentansprüche

1. Werkzeug zur Herstellung hinterschnittener Bohrlöcher mit einem Schneidenkopf (10) und einem den Schneidenkopf tragenden Schaft (11), dessen vom Schneidenkopf abgekehrter Endabschnitt zum Einstecken in eine Werkzeugaufnahme einer drehschlagenden Antriebsmaschine, wie Bohrhammer, Schlagbohrmaschine od. dgl., ausgebildet ist, mit einer am Schneidenkopf axial vorstehenden Hauptschneide (13) und mit einer hinter der Hauptschneide aus dem Schneidenkopf seitlich ausschiebbarer Nebenschneide (14) und mit einem Ausrückmechanismus (15) für die Nebenschneide, dadurch gekennzeichnet, daß die Nebenschneide (14) mindestens einen Bohrschlagbolzen (18) mit Schneidspitze (19) aufweist, der in einer zur Hauptschneidenachse (22) spitzwinklig verlaufenden Führungsbohrung (20) im Schneidenkopf (10) axial verschieblich gehalten ist und in eine im Schaft (11) vom Schaftende bis zum Schneidenkopf (10) axial verlaufende Zentralbohrung (23) hineinragt, und daß der Ausrückmechanismus (15) einen die Schlagbewegung der Antriebsmaschine auf den Bohrschlagbolzen (18) übertragenden Schlagstößel (29) aufweist, der in der Zentralbohrung (23) axial verschieblich geführt ist und bei eingerücktem Bohrschlagbolzen (18) über das Ende des Schaftes (11) vorsteht.

2. Werkzeug nach Anspruch 1, dadurch gekennzeichnet, daß zwischen dem Bohrschlagbolzen (18) und dem Schlagstößel (29) ein der Kraftübertragung dienendes Ausrückelement (26) angeordnet ist, das in einem endseitigen Bohrungsabschnitt (25) der Zentralbohrung (23) mit vorzugsweise größerem Bohrungsdurchmesser in Achsrichtung geführt ist.

3. Werkzeug nach Anspruch 2, dadurch gekennzeichnet, daß das Ausrückelement (26) eine zur Zentralbohrung (23) spitzwinklig verlaufende Mantelfläche (27) aufweist, an welcher der Bohrschlagbolzen (18) mit einer entsprechend ausgebildeten Anlagefläche (28) anliegt.

4. Werkzeug nach einem der Ansprüche 1-3, dadurch gekennzeichnet, daß der Schlagstößel (29) bezüglich der Zentralbohrung (23) herausziehbar und einsteckbar ausgebildet ist.

5. Werkzeug nach einem der Ansprüche 1-4, dadurch gekennzeichnet, daß im Schneidenkopf (10) mehrere Führungsbohrungen (20), deren Bohrungsachsen (21) einen Kegelmantel aufspannen, mit jeweils einem axial verschieblichen Bohrschlagbolzen (18) gleichmäßig verteilt angeordnet sind und daß das Ausrückelement (26) einen Führungszylinder und eine Kegelspitze (27) aufweist, an welcher die Bohrschlagbolzen (18) endseitig anliegen.

## Claims

1. Tool for the production of undercut bore holes with a cutting head (10) and a shank (11), which bears the cutting head and the end section of which, remote from the cutting head, is designed for insertion into a tool holder of a rotary percussive driving machine, such as hammer-drill, percussion boring machine or the like, with a major cutting edge (13), projecting axially on the cutting head, and with a minor cutting edge (14), behind the major cutting edge and capable of being pushed out laterally from the cutting head, and with a shifting mechanism (15) for the minor cutting edge, characterized in that the minor cutting edge (14) has at least one boring striker (18) which has a cutting tip (19), is held axially displaceably in a guide bore (20), extending at an acute angle to the major cutting edge axis (22), and projects into a central bore (23), extending axially in the shank (11) from the shank end up to the cutting head (10), and in that the shifting mechanism (15) has an impact rod (29), which transfers the impact movement of the driving machine onto the boring striker (18), is guided axially displaceably in the central bore (23) and, with retracted boring striker (18), projects beyond the end of the shank (11).

2. Tool according to claim 1, characterized in that between the boring striker (78) and the impact rod (29) there is arranged a shifting element (26), which serves for the transfer of force and is guided in axial direction in an end bore section (25) of the central bore (23) of preferably greater bore diameter.

3. Tool according to claim 2, characterized in that the shifting element (26) has an outer surface (27), which extends at an acute angle towards the central bore (23) and against which the boring striker (18) bears with a correspondingly designed contact surface (28).

4. Tool according to one of claims 1-3, characterized in that the impact rod (29) is designed in such a way that it can be withdrawn and inserted with respect to the central bore (23).

5. Tool according to one of claims 1-4, characterized in that there are arranged, evenly distributed, in the cutting head (10) a plurality of guide bores (20), the bore axes (21) of which generate a cone-shaped shell, with in each case an axially displaceable boring striker (18), and in that the shifting element (26) has a guide cylinder and a conical tip (27), against which the boring strikers (18) bear at the ends.

## Revendications

1. Outil pour contre-dépouiller des trous, avec une tête de coupe (10) et une tige (11) portant la tête de coupe, tige dont la section d'extrémité opposée à la tête de coupe est réalisée pour être enfichée dans un porte-outil d'une machine d'entraînement à rotation et percussion, telle qu'un marteau foreur, une perceuse à percussion, ou similaire, avec un tranchant principal (13) émergeant axialement sur la tête de coupe et avec un tranchant auxiliaire (14) susceptible de se dégager latéralement derrière le tranchant principal, hors de la tête de coupe, et avec un mécanisme de dégagement (15) pour le tranchant auxiliaire, caractérisé en ce que le tranchant auxiliaire (14) presente au moins un boulon de percussion (18) avec une pointe de tranchant (19), boulon qui est maintenu de manière axialement mobile dans la tête de coupe (10), dans un alésage de guidage (20) se développant à angle aigu, par rapport à l'axe du tranchant principal (22), boulon qui émerge dans un alésage central (23) se développant axialement dans la tige, depuis l'extrémité de tige jusqu'à la tête de coupe (10), et en ce que le mécanisme de dégagement (15) présente un poussoir de percussion (29) transmettant le mouvement de percussion de la machine d'entraînement sur les boulons de percussion (18), poussoir qui est guidé de manière axialement mobile dans l'alésage central (23) et qui émerge sur l'extrémité de la tige (11) lorsque le boulon de percussion (18) est rentré.

2. Outil selon la revendication 1, caractérisé en ce qu'un élément de dégagement (26) servant à la transmission des efforts est disposé entre le boulon de percussion (18) et le poussoir de percussion (29), éléments qui est guidé dans une section d'alésage (25) de l'alésage central (23) située côté extrémité, possédant, de préférence, un diamètre d'alésage plus important, en direction axiale.

3. Outil selon la revendication 2, caractérisé en ce que l'élément de dégagement (26) présente une surface d'enveloppe (27) se développant à angle aigu par rapport à l'alésage central (23), sur laquelle appuie le boulon de percussion (18), avec une surface d'appui (28) réalisée en conséquence.

4. Outil selon l'une des revendications 1 à 3, caractérisé en ce que le poussoir de percussion (29) est réalisé de manière susceptible d'être extrait et enfiché, par rapport à l'alésage central (23).

5. Outil selon l'une des revendications 1 à 4, caractérisé en ce que plusieurs alésages de guidages (20) sont disposés en étant répartis de manière régulière dans la tête de coupe (10), dont les axes d'alésage (21) décrivent une enveloppe conique, avec chaque fois un boulon de percussion (18) axialement mobile, et que l'élément de dégagement (26) présente un cylindre de guidage et une pointe de cône (27), sur laquelle appuient les boulons de percussion (18) à leur extrémité.

Fig. 1

Fig. 2

*Fig. 3*   *Fig. 4*